Europäisches Patentamt

European Patent Office

Office européen des brevets

(19)

(11) Publication number: 0 309 193
A2

## (12) EUROPEAN PATENT APPLICATION

(21) Application number: 88308691.0

(22) Date of filing: 20.09.88

(51) Int. Cl.⁴: G06K 7/08 , E05B 49/02

(30) Priority: 23.09.87 US 99929

(43) Date of publication of application:
29.03.89 Bulletin 89/13

(84) Designated Contracting States:
BE CH DE ES FR GB IT LI NL

(71) Applicant: EMHART INDUSTRIES, INC.
426 Colt Highway
Farmington Connecticut 06032(US)

(72) Inventor: Frolov, George
23 Woodruff Road
Farmington Connecticut 06032(US)

(74) Representative: Stagg, Diana Christine et al
Emhart Patents Department Lyn House 39
The Parade
Oadby Leicester LE2 5BB(GB)

(54) Improved card reader.

(57) A magnetic card reader for reading data for
electronic locks or the like is provided. The reader
"reads" data both when the card (20) is inserted and
upon withdrawal, thereby decreasing the chances of
misreading the data.

EP 0 309 193 A2

FIG. 2

## IMPROVED CARD READER

The present invention relates to magnetic card readers for reading data from cards or badges such as employee badges or key cards for electronic locks. The reader "reads" the data from the card, and supplies the data to a device in which the data is used, such as an electronic door lock, a computer or an encoding or recording device.

U.S. 4 126 780 describes an optical card reader which has a spring to bias the card away from the light detector and a photo-electric bottom detector to produce a signal when the card reaches the bottom of the reader.

U.S. 4 519 228 describes an electronic recodable lock which includes a magnetic or optical card reader. The card reader includes a lever activated switch which turns on the reading head when the key is inserted into the slot and an end switch which turns the reading head off when the key reaches the end of the slot.

U.S. 3 896 293 describes a card reader having a constant velocity card transport mechanism. This reader uses a cantilever spring to urge a roller which contacts the card towards the read head so that the coded portion of the card will be forced against the read head.

Re 29846 describes an electronic lock system which includes a key card reader. This card reader contains a microswitch to activate the read sensors after the card has been fully inserted.

U.S. 3 622 991 describes an electronic locking system which includes an optical card reader system. This card reader uses a shutter which is capable of limited pivotal movement to insure correct orientation of the key card in the slot.

A general problem associated with prior art card readers, such as those described above, is misreading of the data contained on the cards. Such a problem is particularly troublesome for card readers used for electronic door locks, because insertion of the correct card key will not result in the lock being opened if the data is misread. Misreading may be caused by a misalignment of the card with the read head. In addition, misreading may occur because the card does not move past the read head at a velocity which the read head can accept. Solutions to these problems have been proposed in the art, but such proposed solutions have proved to be costly to manufacture and maintain.

It is an object of the present invention to provide a card reader in which the above disadvantages are reduced or substantially obviated.

The present invention provides a magnetic card reader which comprises a cover, a slot in the cover to accept a card, a magnetic reading head movably mounted within the cover, characterised in that the reader further comprises a first switch means positioned within the cover to initiate entry reading of the card, a second switch means positioned within the cover to terminate entry reading of the card and to initiate withdrawal reading of the card, and a spring means responsive to the insertion of the card to actuate the first and second switch means, the spring means having the reading head attached thereto.

The present invention further provides a spring for a magnetic card reader characterised in that it comprises a base and two arms attached thereto; one arm being adapted to bias a read head toward a magnetic card: the other arm being adapted to actuate two microswitches: the fist microswitch being actuated as the card initially enters the reader and the second microswitch being actuated when the card reaches the end of its travel.

A card reader according to the present invention is particularly suitable for those applications which compare the data read to stored data and produces a "go" signal if they match and a "no-go" signal if they do not.

Examples of these applications are electronic door locks where the lock is opened if the data matches but remains locked if it does not. Other examples include card readers for employee badges and the like where attendance or the details of a night watchman's rounds are recorded or encoders in which a card is encoded with data and then the encoded data is checked against stored data.

The card reader according to the present invention accomplishes the dual reading function by means of a simple and inexpensive spring device. The spring is formed to include two arms. One arm supports the read head and biases it toward the card. The other arm contains two pivot points so that when the card is initially inserted a portion of the spring will deflect and thus activate a first microswitch which in turn activates the reading head and the corresponding electronic and logic circuitry. As the card continues to be inserted, it passes a second or central pivot point so that when it reaches the end of the path, the spring will deflect and activate a second microswitch. The second microswitch signals that the insert reading has ended and that the withdrawal reading should begin.

The invention will now be described with reference to the accompanying drawings, in which

Figure 1 shows a card reader according to the present invention with a portion of the outside cover broken away to show a card fully inserted and the card reader spring in phantom;

Figure 2 is an exploded view of the card reader, showing the outside cover, card reader spring and electronic module;

Figures 3, 4 and 5 are side sectional views of the reader mechanism taken along section line 1-1 with the card prior to insertion, partially inserted and fully inserted;

Figure 6 is a rear view of the card reader spring;

Figure 7 is a side view of the card reader spring;

Figures 8, 9 and 10 are side sectional views taken along section line 2-2 with the card prior to insertion, after insertion but prior to being read and after insertion as reading is commenced;

Figures 11 and 12 show the electronic module and

Figure 13 shows the card reader mechanism used as part of an electronic door lock system.

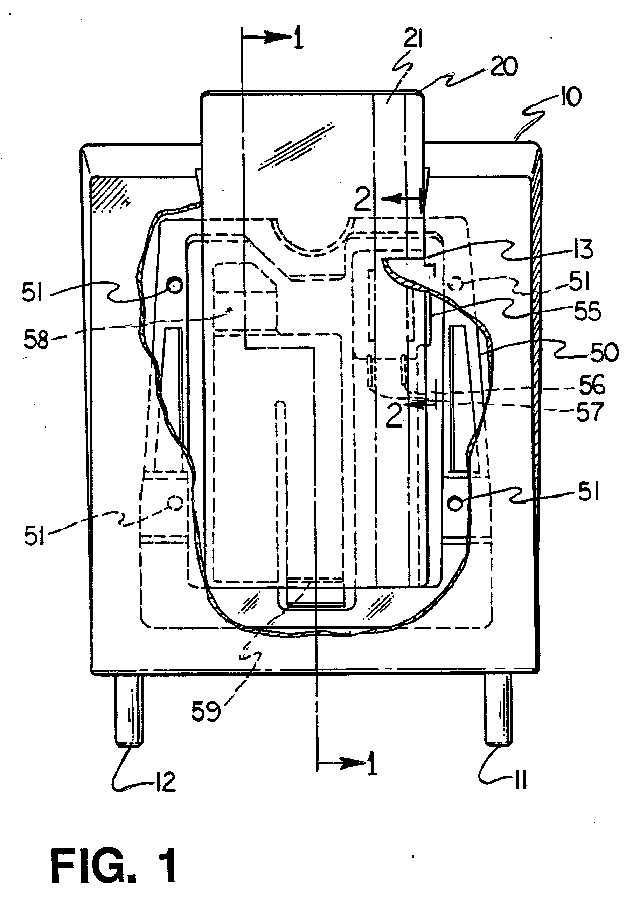

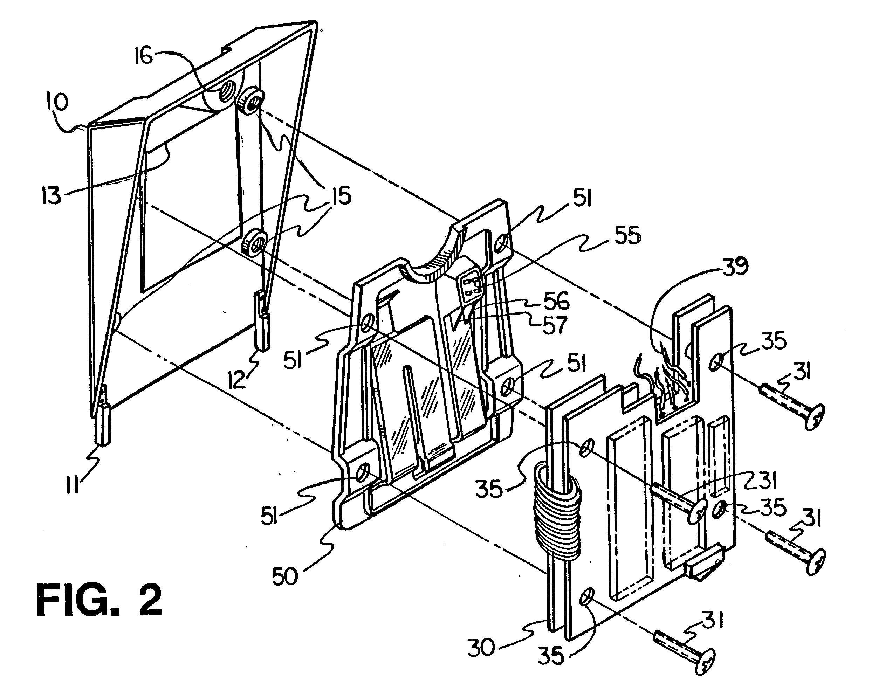

As is shown in Figures 1 and 2, a preferred embodiment of the card reader according to the present invention includes an external housing or cover 10. Two protruding arms 11 and 12 are positioned to be received by the apparatus in which the card reader is employed. A slot 13 is positioned horizontally in the external cover 10. The slot is sized to accept a card 20 which contains a magnetic strip 21.

A card reader spring 50 and electronic module 30 are attached to the inside of the cover 10 by means of screws 31 through holes 35 of the electronic module and through holes 51 of the spring 50. The screws attach into threaded holes 15 in bosses on the inside of the cover 10. The card reader is secured to the apparatus in which it is employed by screw means into a threaded hole 16.

A magnetic read head 55 is attached to one arm of the card reader spring 50 by means of a suitable adhesive, for example and an anaerobic or moisture curable adhesive. Supports 56 and 57 are provided for structural rigidity. The read head 55 may be any suitable magnetic strip reader. The read head is connected to the electronic module by means of wires 39 or flexible circuit strip (not shown).

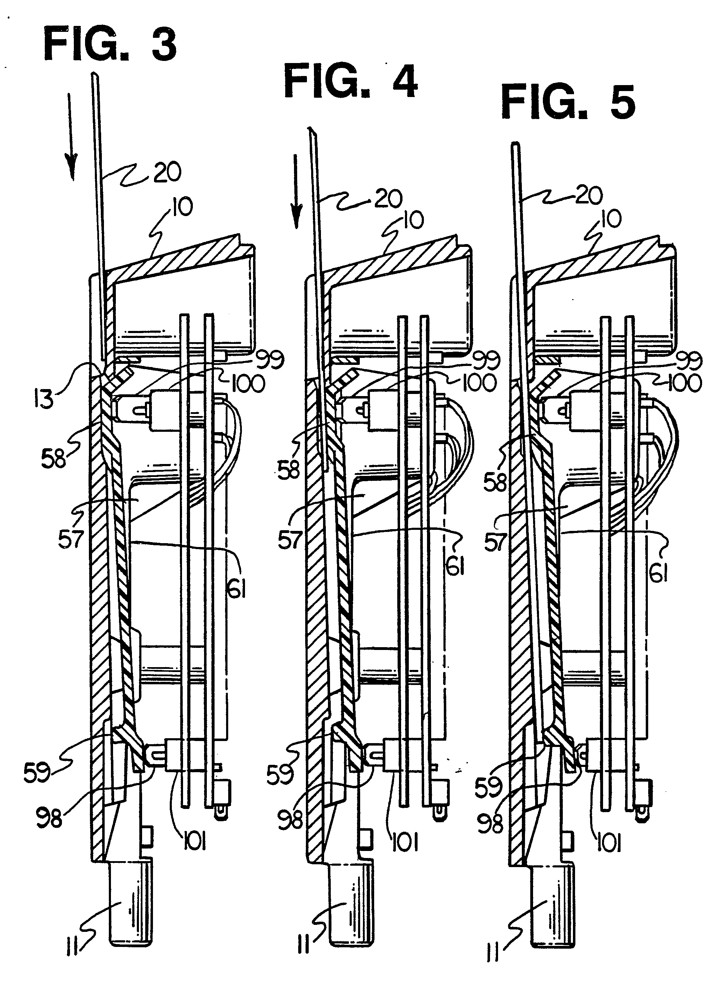

The operation of the card reader will be explained in greater detail with reference to Figures 3, 4 and 5. In Figure 3 the card 20 is positioned immediately outside the slot 13. A microswitch 100 is in an open or "off" position. As the card 20 is inserted through the slot 13 and into the passage, it encounters an indented portion 58 of the spring 50 as is shown in Figure 4. At the initial encounter, the spring 50 deflects and depresses a lever 99 and thus actuates the microswitch 100, which activates the entire electronic module as well as the read head. Figure 4 shows the microswitch 100 in a depressed or "on" position. The read head reads data contained on the card 20 as the card 20 continues down the passage. At the end of the passage, the card 20 encounters a raised portion 59 of the spring 50 as is shown in Figure 5. At this encounter, the spring 50 deflects, depresses the lever 98 and thus actuates a microswitch 101. Figure 5 shows the microswitch 101 in a depressed or "on" position. The microswitch 101 signals to the electronic circuitry that the insert reading has ended and that withdrawal reading should begin.

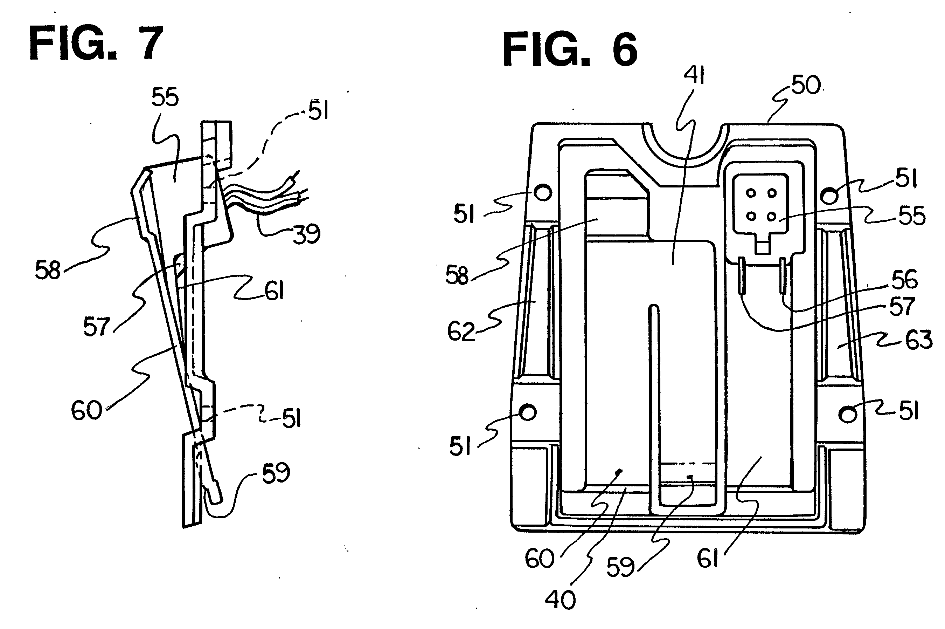

The configuration of card reader spring 50 will be explained in greater detail with reference to Figures 6 and 7. The spring 50 has a frame or base portion to which two arms 60 and 61 are attached. The base of the spring can accommodate one or more indented areas 62 and 63 for structural rigidity. The right arm 61 is generally rectangular and is attached to the base of the spring. The reading head 55 is attached to the right arm 61 at the end opposite to the attachment to the base. The right arm 61 is biassed toward the external cover 10 of the card reader and is responsive to insertion of the card. In particular the right arm 61 is adapted to urge the read head 55 towards the card 20. The left arm 60 is generally shaped like a small "h" with only the lower left portion of the h being attached to the base of the spring. The left arm 60 includes two pivot points which allows it to perform two functions. The approximate locations of the pivot points are identified by the numbers 40 and 41. The upper portion of the left arm of the spring has an indented configuration with a crown 58 located at the top of the h. The indented configuration and crown 58 are depicted in side view in Figure 7. The lower right portion of the h-shaped left arm contains another raised portion identified by the numeral 59. The microswitch 100 is located under the crown 58 and the microswitch 101 is located under the raised portion 59 of the left arm 60 of the spring 50. The left arm 60 of the spring 50 is also responsive to the insertion of the card. In particular, the left arm 60 is biassed away from the microswitches 100 and 101 and toward the external cover 10 of the card reader.

The spring 50 can be made of any suitable material but is preferably made of a plastic such as that sold under the Trademark Lexan by General Electric. Other materials with equivalent or similar properties may also be employed. The spring may be manufactured by any suitable method but is preferably made by injection moulding.

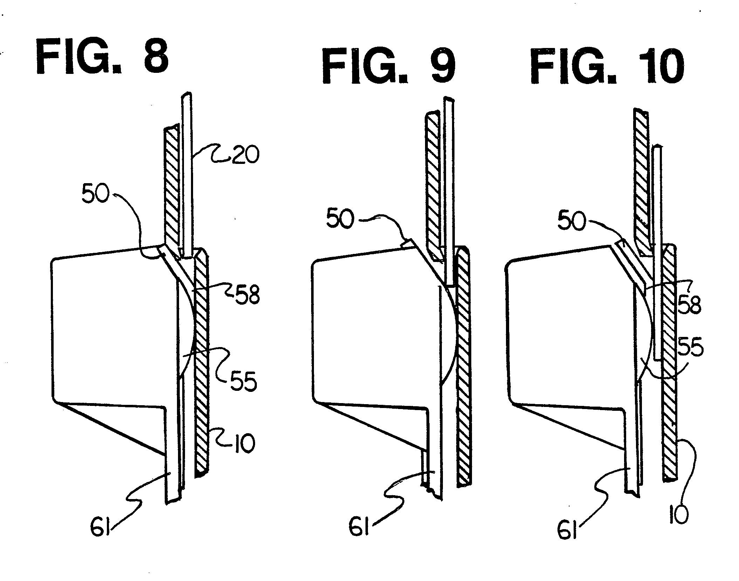

The sequence of operation concerning the microswitch 100 and the read head 55 will be described with reference to Figures 8, 9 and 10. In Figure 8, the card 20 is not inserted. The crown portion 58 of the left arm 60 of the card reader spring 50 as well as the read head 55 are shown biassed against the external cover 10. In Figure 9, as the card 20 is partially inserted into the card reader, it moves past the crown portion 58 of the spring 50. It pushes against the spring and forces it to the left. The crown portion 58 is positioned such that this movement is sufficient to depress lever 99, thus actuating the microswitch 100 and activating the electronic module as shown in Figure 4. This occurs before the card 20 travels to the centre of the read head 55, the location for reading the data. As shown in Figures 4 and 10, the microswitch 100 has been actuated, which in turn has activated the electronic and logic circuitry as well as the read head 55.

The read head can thus read data encoded on the magnetic strip 21 as soon as it is pushed past the centre of the read head 55. This feature allows data to be encoded along the entire length of the magnetic strip 21. In the position shown in Figure 10, the card 20 has not yet encountered the raised portion 59 of the left arm 60. Accordingly, the raised portion 59 has not yet deflected and the microswitch 101, which is located beneath the raised portion 59, has not yet been actuated.

In Figure 5, the card 20 has been inserted to the fullest extent. As it was inserted past the read head 55, the read head was reading the information encoded on the magnetic strip 21. Toward the end of its travel, the card encountered the raised portion 59. The spring 50 is biassed away from the microswitch 101. As the card 20 contacted the raised portion, it pushed it to the right, thus depressing the lever 98 of the microswitch located beneath the raised portion 59. This in turn actuates the microswitch 101.

When the microswitch 101 is actuated, the microswitch 100 is still engaged and thus the read head 55 is still activated. The microswitch 101 performs two functions. First, the microswitch 101 signals to the logic circuit that the travel of the card 20 has been completed, so that the information read by the read head 55 can be transmitted to the logic circuitry where it can be compared with the information stored therein to determine if the information matches and the lock can be opened. If a match were found, the lock would be opened. Frequently, however, when inserting the card, the read head does not properly read the data and thus sends incorrect information to the logic circuitry, resulting in no match and the lock not being opened. In this situation, the user must remove the card and try again. It is in this situation that the present card reader provides a novel approach in which the microswitch 101 signals to the logic circuit to begin accepting information from a second reading, as the card is withdrawn. The second function of the microswitch 101 is to initiate the withdrawal reading. Thus, if the reader incorrectly reads the information on insertion of the card, it is given another chance to reread the information as the card is withdrawn. In this manner the user of the system is given two chances each time the card is inserted, thus improving the probability of a correct read and opening of the door if the data matches.

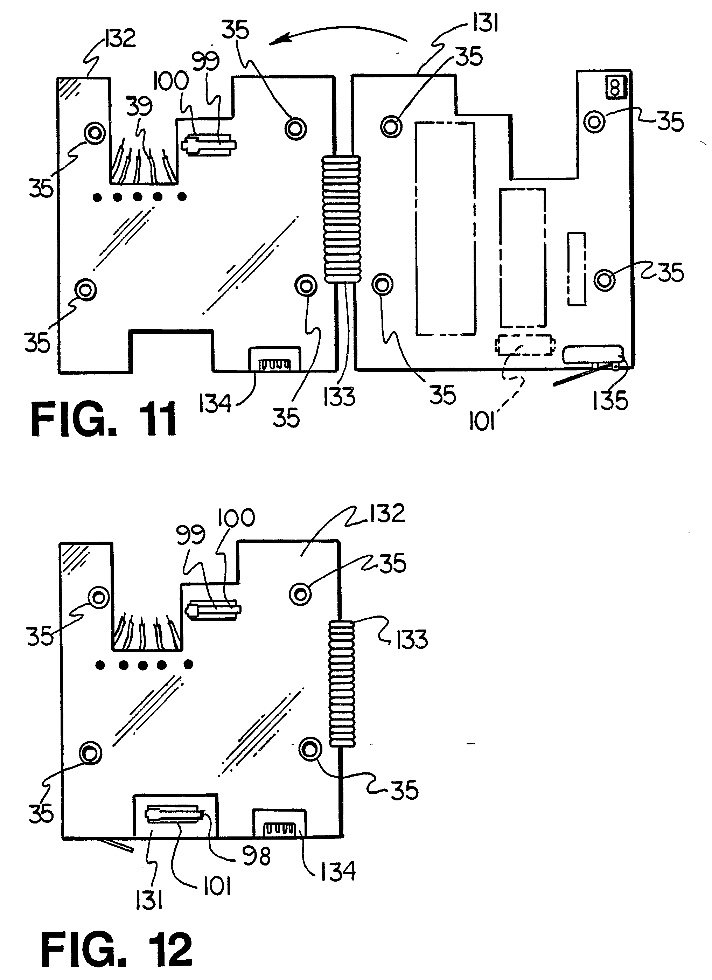

As shown in Figures 11 and 12, the electronic module 30 contains the electronic and logic circuitry to operate the reader. In addition, the module may contain circuitry to operate a device such as an electronic lock. Power is supplied by batteries or external power structure (not shown). Batteries may be of any suitable type.

The electronic module 30 comprises two boards 131 and 132 movably connected by a wire and tape connector 133. The microswitch 101 and the microprocessor chips are located on the board 131. Details of the preferred electronic and logic circuitry may be found in our co-pending European Patent Application No. (F14762) of even date herewith. The microswitch 100, read head wires 39 and connection means 134 are also located on the board 132. The connection means 134 are provided so that the "go" signal generated by the circuitry can be transmitted to the device being actuated. As can be seen, the board 131 swings around behind board 132 so that holes 35 line up to accept screws 31 as shown in Figure 2. In addition, portions of the board 132 are cut away as shown to provide space for the microswitch 101 and read head 55.

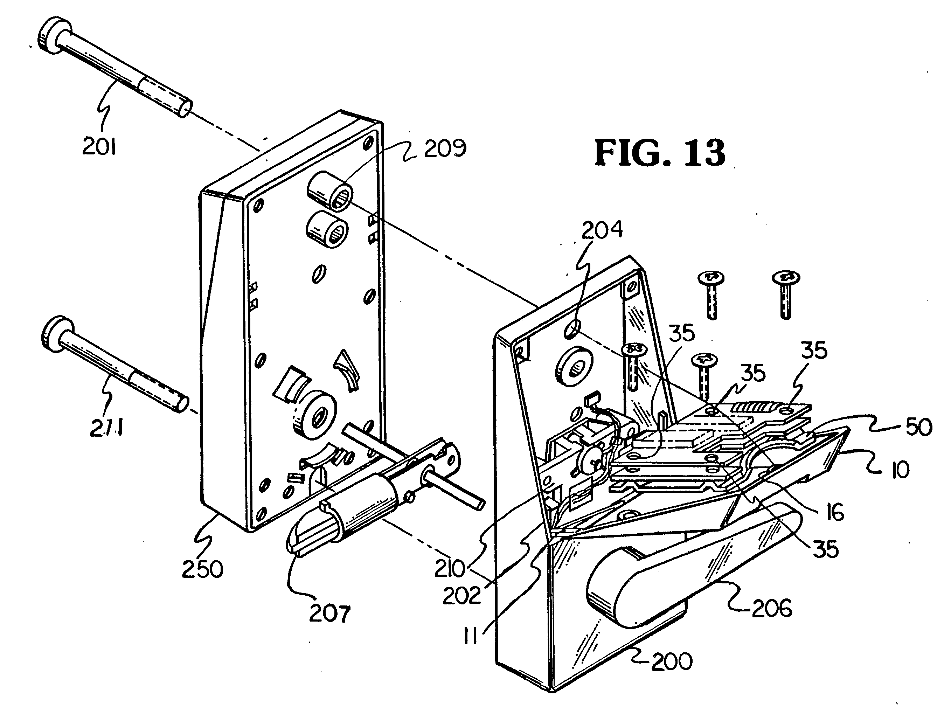

The card reader is illustrated as a component of an electronic lock in Figure 13. The preferred electronic door lock with which the card reader according to the present invention can be used comprises a housing 200, outside lever 206, a lock operating mechanism 210, a latch bolt assembly 207, an inside housing 250 and inside lever (not shown). A strike box and strike plate (not shown) are mounted on the door jam in conventional manner.

Details of the preferred electronic door lock are described in our co-pending European Patent Application No. (F14760) of even date herewith, our co-pending European Patent No. (F14759) of even date herewith.

The card reader, including the outside cover 10, spring 50, and electronic module 30, is located in the upper right of the housing 200 of the electronic lock. The card reader is secured to the lock by protrusions 11 and 12 and by a screw 201. Tabs 202 are positioned so that the protrusions 11 and 12 can rest against them and hold the card reader in a relatively horizontal position for servicing. The screw 201 is positioned so that access is from the inside of the door. The screw 201 fits through a hole 209 in the inside portion 250 of the electronic lock, through a hole 204 in the back plate of the housing 200 and secures the card reader by a threaded hole 16 when the outside cover is pivoted upward into position.

## Claims

1. A magnetic card reader which comprises
a cover (10);
a slot (13) in the cover (10) to accept a card (20);
a magnetic reading head (55) movably mounted within the cover (10);
characterised in that the reader further comprises a first switch means (100) positioned within the cover (10) to initiate entry reading of the card (20);
a second switch means (101) positioned within the cover (10) to terminate entry reading of the card and to initiate withdrawal reading of the card; and
a spring means (50) responsive to the insertion of the card (20) to actuate the first and second switch means (100,101), the spring means (50) having the reading head (55) attached thereto.

2. A card reader according to claim 1 characterised in that the spring means (50) urges the read head (55) towards the card (20).

3. A card reader according to claim 1 or claim 2 characterised in that the first (100) and second (101) switch means comprise microswitches.

4. A spring (50) for a magnetic card reader characterised in that it comprises
a base and two arms (60,61) attached thereto;
one arm (61) being adapted to bias a read head (55) toward a magnetic card (201);
the other arm (60) being adapted to actuate two microswitches (100,101); the first microswitch (100) being actuated as the card initially enters the reader and the second microswitch (101) being actuated when the card reaches the end of its travel.

5. A spring according to claim 4 characterised in that the arm (61) adapted to bias the read head (55) is rectangular in shape.

6. A spring according to claim 4 or claim 5 characterised in that the arm (60) adapted to actuate the microswitches (100,101) is shaped like a small h and is attached to the base at the lower left portion thereof.

7. A magnetic card reader according to any one of claims 1 to 3 characterised in that it comprises a spring according to any of claims 4 to 6.

# FIG. 1

**FIG. 2**

EP 0 309 193 A2

# FIG. 3

# FIG. 4

# FIG. 5

**FIG. 6**

**FIG. 7**

FIG. 8   FIG. 9   FIG. 10

**FIG. 11**

**FIG. 12**

**FIG. 13**

EP 0 309 193 A2